# EUROPEAN PATENT SPECIFICATION

(11) **EP 4 144 645 B1**
(45) Date of publication and mention of the grant of the patent: **27.11.2024**
(21) Application number: 22167941.8
(22) Date of filing: 12.04.2022
(51) Int. Cl.: B64D 11/06, B60N 2/02, B60N 2/24

(54) **LIFT ASSIST SYSTEM IN AIRCRAFT SEAT**
HUBUNTERSTÜTZUNGSSYSTEM IN EINEM FLUGZEUGSITZ
SYSTÈME D' ASSISTANCE AU LEVAGE DANS UN SIÈGE D' AVION

(30) Priority: 02.09.2021 IN 202141039810; 14.10.2021 US 202117501223
(43) Date of publication of application: 08.03.2023
(73) Proprietor: B/E Aerospace, Inc., Winston-Salem, NC 27105 (US)
(72) Inventor: KOUSTUBHAN, Arjun, Hyderabad (IN); KODATI, Sambasiva Rao, Kaikalur (IN)
(74) Representative: Dehns

(56) References cited:
- EP-A2- 0 980 825
- EP-B1- 3 315 409
- US-A1- 2010 032 994
- US-A1- 2010 193 634
- US-A1- 2012 169 099
- US-A1- 2015 108 804

## Description

### CROSS-REFERENCE TO RELATED APPLICATIONS

The present application claims the benefit of India Provisional Patent Application Serial Number 202141039810, filed on September 2, 2021, entitled LIFT ASSIST SYSTEM FOR AN AIRCRAFT SEAT, naming Arjun Koustubhan and Sambasiva Kodati as inventors.

### BACKGROUND

The lack of movement during long-haul flights often causes passengers to feel sluggish. As such, it becomes increasingly difficult for passengers to get up from their seat. US 2010/193634, EP 3 315 409 relate to aircraft seats. US 2010/032994 relates to a seat articulation mechanism.

### SUMMARY

An aircraft seat is disclosed, in accordance with one or more embodiments of the disclosure. The aircraft seat is provided in claim 1 and includes a base assembly couplable to a floor of an aircraft. The aircraft seat includes a seat frame coupled to the base assembly, the seat frame including a seat pan frame and a seatback frame, the seat comprising a seat pan coupled to the seat pan frame, the seat pan including one or more fixed seat pan rails, the seat pan configured to couple to a seat pan cushion, the seatback frame configured to couple to a seatback cushion. The aircraft seat includes a lift assist system configured to position the seat pan between one or more positions. The lift assist system includes one or more pivoting lift rails configured to couple to the one or more fixed seat pan rails. The lift assist system includes an actuator sub-system, the actuator sub-system comprising an actuator configured to actuate the one or more pivoting lift rails between the one or more positions.

In some embodiments, the actuator sub-system may further include one or more pivots coupled to one or more fixed cross seat pan rails, the one or more pivots configured to couple the actuator to the one or more pivoting lift rails.

In some embodiments, the actuator may be configured to actuate the seat pan frame between a stowed position and a deployed position by lifting the one or more pivoting lift rails a predetermined distance to cause the seat pan frame to lift the predetermined distance.

In some embodiments, the actuator may be configured to apply an amount of force in an upward direction to the one or more fixed cross seat pan rails to cause the one or more pivoting lift rails to lift the predetermined distance to cause the seat pan frame to lift the predetermined distance.

In some embodiments, the aircraft seat may further include a control panel communicatively coupled to an aircraft controller, the control panel coupled to the actuator sub-system to cause the actuator sub-system to actuate the one or more pivoting lift rails a predetermined distance.

In some embodiments, the actuator may include an electro-mechanical actuator.

In some embodiments, the actuator may be configured to actuate the seat pan frame between a stowed position and a deployed position by lifting the one or more pivoting lift rails a predetermined distance to cause the seat pan frame to lift the predetermined distance when the seat pan cushion and the seatback cushion are separated a select distance.

In some embodiments, the aircraft seat may further include a control panel communicatively coupled to an aircraft controller, the control panel coupled to the translation sub-system to cause the translation sub-system to translate the seat pan frame the select distance away from the seatback frame.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates an aircraft cabin with an aircraft seat including a lift assist system, in accordance with one or more embodiments of the disclosure;
FIG. 2 illustrates a simplified block diagram of the lift assist system, in accordance with one or more embodiments of the disclosure;
FIG. 3A illustrates a rear view of the seat frame of the aircraft seat including the lift assist system in a stowed position, in accordance with one or more embodiments of the disclosure;
FIG. 3B illustrates a side view the seat frame of the aircraft seat including the lift assist system in a stowed position, in accordance with one or more embodiments of the disclosure;
FIG. 4A illustrates a rear view of the seat frame of the aircraft seat including the lift assist system in a deployed position, in accordance with one or more embodiments of the disclosure;
FIG. 4B illustrates a side view the seat frame of the aircraft seat including the lift assist system in a deployed position, in accordance with one or more embodiments of the disclosure;
FIG. 4C illustrates a side view of the seat frame of the aircraft seat including the lift assist system in a deployed position, in accordance with one or more embodiments of the disclosure;
FIG. 5 illustrates an isolated view of the seat pan frame and base assembly of the aircraft seat including the lift assist system, in accordance with one or more embodiments of the disclosure;
FIG. 6 illustrates an isolated side view of the seat pan frame and base assembly of the aircraft seat including the lift assist system, in accordance with one or more embodiments of the disclosure;
FIG. 7A illustrates an isolated side view of the seat pan frame and base assembly of the aircraft seat including the lift assist system, in accordance with one or more embodiments of the disclosure;
FIG. 7B illustrates an isolated side view of the seat pan frame and base assembly of the aircraft seat including the lift assist system, in accordance with one or more embodiments of the disclosure;
FIG. 8A illustrates an isolated top view of the seat pan frame and base assembly of the aircraft seat including the lift assist system, in accordance with one or more embodiments of the disclosure;
FIG. 8B illustrates an isolated top view of the seat pan frame and base assembly of the aircraft seat including the lift assist system, in accordance with one or more embodiments of the disclosure;
FIG. 9 illustrates a cross-sectional view of a translation sub-system of the lift assist system, in accordance with one or more embodiments of the disclosure;
FIG. 10A illustrates an isolated top view of the seat pan frame and base assembly of the aircraft seat including the lift assist system, in accordance with one or more embodiments of the disclosure;
FIG. 10B illustrates an isolated top view of the seat pan frame and base assembly of the aircraft seat including the lift assist system, in accordance with one or more embodiments of the disclosure; and
FIG. 10C illustrates an isolated top view of the seat pan frame and base assembly of the aircraft seat including the lift assist system, in accordance with one or more embodiments of the disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one," "one or more," or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of or sub-combination of two or more such features, along with any other features which may not necessarily be expressly described or inherently present in the instant disclosure.

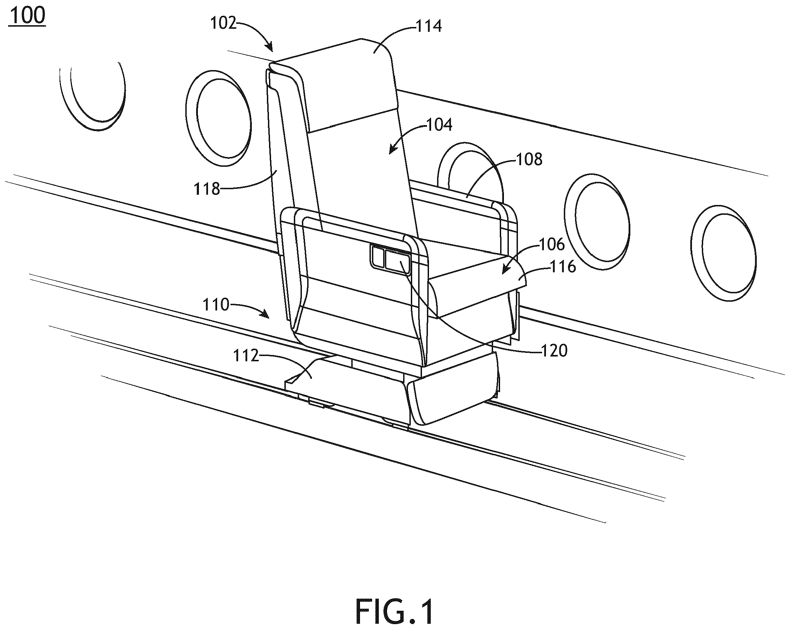

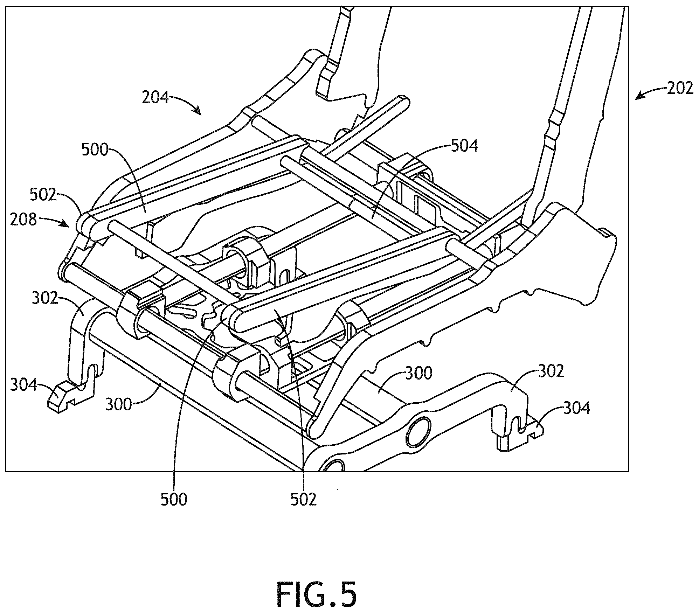

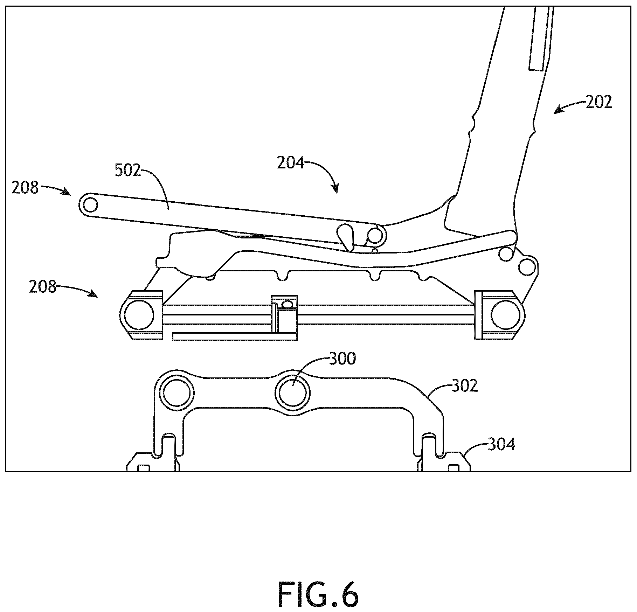

FIGS. 1-10C in general illustrate a lift assist system for an aircraft seat, in accordance with one or more embodiments of the disclosure.

The lack of movement during flights, particularly during long-haul flights, often causes passengers to feel sluggish. For example, sitting for long periods slows blood circulation, which may cause fluid to pool in the legs. As such, it becomes increasingly difficult for passengers to get up from their seat. Therefore, there is a need for a lift assist system to assist passengers when getting up from their seat.

Although conventional aircraft seats for long-haul flights include cushions to reduce discomfort during long hours of time, the cushions do not alleviate the inherent problems associated with long-haul flights and do not assist passengers when egressing from their seat.

As such, it would be desirable to provide a lift assist system for an aircraft seat. The lift assist system should be configured to lift a seat pan of the aircraft seat to assist the passenger when getting up from the aircraft seat. The lift assist system should meet aviation guidelines and/or standards.

FIG. 1 in general illustrates an aircraft cabin 100 including an aircraft seat 102, in accordance with one or more embodiments of the disclosure. For example, the aircraft seat 102 may include, but is not limited to, a business class or first-class passenger seat, an economy-class passenger seat, a crew member seat, or the like. It is noted the terms "aircraft seats" and "passenger seats" may be considered equivalent, for purposes of the disclosure.

The aircraft seat 102 may include a seatback 104. The aircraft seat 102 may include a seat pan 106. The aircraft seat 102 may include one or more arms 108. The aircraft seat 102 may be coupled to a base 110. The base 110 may be covered by a shroud 112. For example, the shroud 112 may include one or more sections configured to cover at least a portion of the aircraft seat 102. For instance, the shroud 112 may include a bucket shroud section and a base shroud section. It is noted, however, that the shroud 112 may be formed from one piece (i.e., includes a single section).

The seatback 104 may include a headrest 114. For example, the headrest 114 may be integrated within the seatback 104. By way of another example, the headrest 114 may be a separate component coupled to (or inserted into) the seatback 104. For instance, the headrest 114 may be movable relative to the seatback frame of the aircraft seat 102 (e.g., adjustable, removable, or the like).

The seat pan 106 may be coupled to the seatback 104, such that actuation of one may cause a corresponding actuation of the other. For example, the seat pan 106 may be coupled to the seatback 104 via one or more pivot joints. For instance, the seatback 104 may be configured to rotate about an axis through a pivot joint coupling the seatback 104 and the seat pan 106 during actuation between the upright position and the lie-flat or bed position.

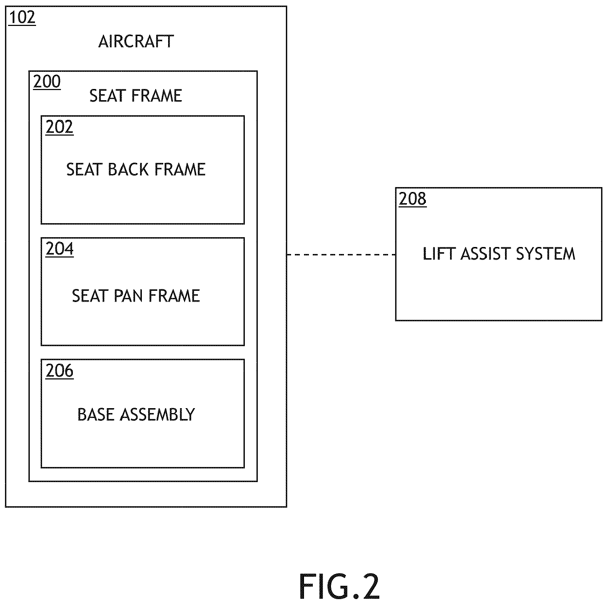

Referring generally to FIGS. 2-9C, the aircraft seat 102 may include a seat frame 200. The seat frame 200 includes at least a seatback frame 202, a seat pan frame 204, and a base assembly 206.

One or more of the seatback frame 202 and/or the seat pan frame 204 may be directly coupled, or indirectly coupled via one or more interconnecting components, to one or more components of the seat frame 200. At least a portion of the shroud 112 (e.g., the bucket shroud section of the shroud 112) may be configured to cover the seat pan frame 204.

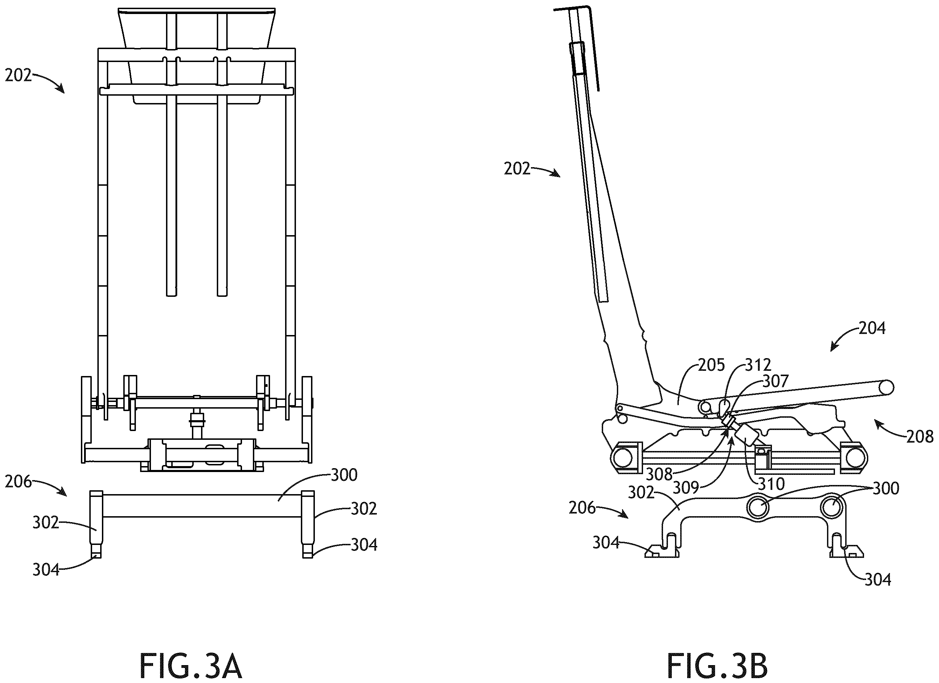

Referring to FIGS. 3A-9C the base assembly 206 may include one or more base rails 300 (e.g., tubes, bars, or the like). For example, the one or more base rails 300 may be positioned relative to a particular direction of travel of the aircraft seat 102 including, but not limited to, perpendicular (e.g., cross-wise), parallel (e.g., cross-wise), or the like. For instance, the one or more base rails 300 may be positioned relative to a same or a different direction of travel of the aircraft seat 102.

The base assembly 206 may include one or more base brackets 302. For example, the one or more base rails 300 may be coupled together via the one or more base brackets 302. For example, a base bracket 302 may couple together the base rail 300 and an adjacent base rail 300 at any angle, such that the base assembly 206 may include an outline of any geometric shape known in the art. For instance, the outline may be rectangular or substantially rectangular. Therefore, the above description should not be interpreted as a limitation on the present disclosure but merely an illustration.

The one or more base brackets 302 may be coupled to a set of floor tracks of the aircraft cabin 100 (e.g., as illustrated in FIG. 1) via one or more floor fittings 304. At least a portion of the shroud 112 (e.g., the base shroud section of the shroud 112) may be configured to cover the base assembly 206.

FIGS. 2-9C illustrate a lift assist system 208 for an aircraft seat 102, in accordance with one or more embodiments of the disclosure. It is noted that the description of the various embodiments, components, and operations described previously herein with respect to the aircraft seat 102 should be interpreted to extend to the system 208, and vice versa.

The aircraft seat 102 includes a lift assist system 208. It is noted that the lift assist system 208 may be adapted and mounted in any orientation to cater to various aircraft seat base designs and requirements.

The lift assist system 208 is configured to lift the seat pan 106 of the aircraft seat 102 to assist the passenger while getting up. For example, the lift assist system 208 may be configured to couple to a portion of the seat pan frame 204 of the aircraft seat 102.

The lift assist system 208 includes one or more pivoting lift rails 500 configured to couple to one or more fixed seat pan rails 502. For example, as shown in FIG. 1, a seat pan cushion 116 of the seat pan 106 may be configured to couple to the seat pan frame 204. For instance, the seat pan cushion 116 may be configured to couple to the one or more pivoting lift rails 500 and the one or more fixed seat pan rails 502. In this regard, when the one or more pivoting lift rails 500 are actuated (as discussed further herein), the one or more pivoting lift rails 500 may be configured to cause the seat pan cushion 116, coupled to the one or more fixed seat pan rails 502, to lift a predetermined distance to assist the passenger when getting up.

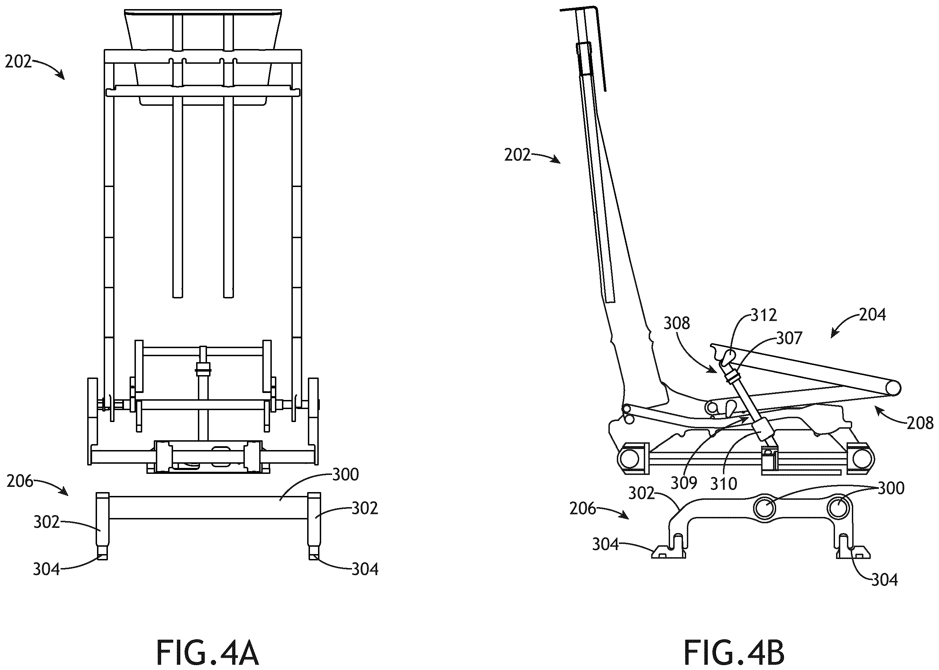

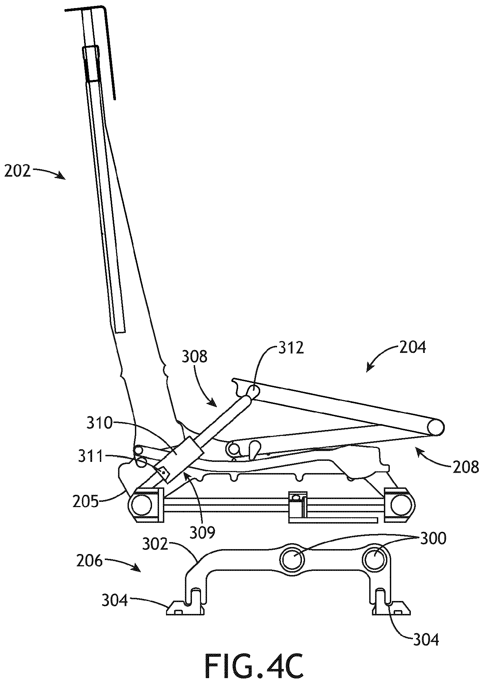

Referring to FIGS. 3A-4C, the lift assist system 208 includes an actuator subsystem 308. The actuator sub-system 308 includes an actuator 309. In some embodiments, as shown in FIGS. 3A-4C, the actuator may include, but is not limited to, a piston 307 (movable portion of the actuator) and a body/chassis 310 (fixed portion of the actuator) configured to actuate the one or more pivoting lift rails 500 between one or more positions. For instance, the piston 307 may be configured to actuate the one or more pivoting lifts rails 500 between a stowed (or normal) position, as shown in FIGS. 3A-3B, to a deployed (or lifted) position, as shown in FIGS. 4A-4C, and vice versa. In this regard, the one or more pivoting lift rails 500 may be configured to actuate a seat pan 106 and/or a seat pan cushion 116 (without causing the seatback 104 and/or seatback cushion 118 to actuate) between the stowed position and the deployed position, and vice versa, by actuating the one or more pivoting lift rails 500.

Referring to FIG. 4B-4C, the actuator sub-system 308 may be installed on any location of the seat frame 200. For example, as shown in FIG. 3B, the piston 307 may be coupled to the pivot 312 and the body/chassis 310 may be coupled via a pivot to the seat frame 205. By way of another example, as shown in FIG. 3C, the piston 307 may be coupled to the pivot 312 and the body/chassis 310 may be coupled via a pivot 311 to the seat frame 205.

The actuator sub-system 308 may be configured to couple to the one or more pivoting lift rails 500 via one or more pivots 312. For example, the one or more pivots 312 may be coupled to one or more fixed cross rails 504 coupled to the one or more pivoting lift rails 500. For instance, when the actuator sub-system 308 actuates between the one or more positions (e.g., stowed/normal position and deployed/lifted position, and vice versa), the actuator sub-system 308 may apply an amount of force to the one or more fixed cross rails 504 to cause the one or more pivoting lift rails 500 to lift a predetermined distance which then causes the seat pan cushion 116 to lift, without lifting the seatback cushion 118 and/or seatback frame 202. In this regard, the lifting of the seat pan cushion 116 a predetermined distance, via the one or more pivoting lift rails 500 and the actuator sub-system 308, provides the passenger assistance when they are getting up from the aircraft seat 102.

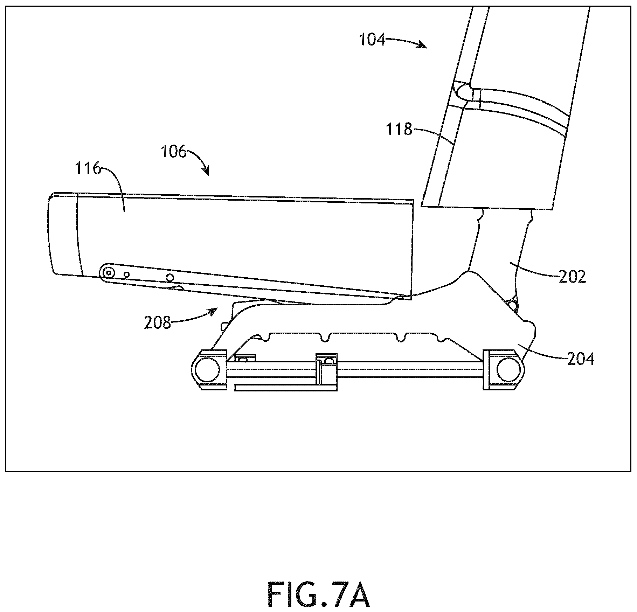

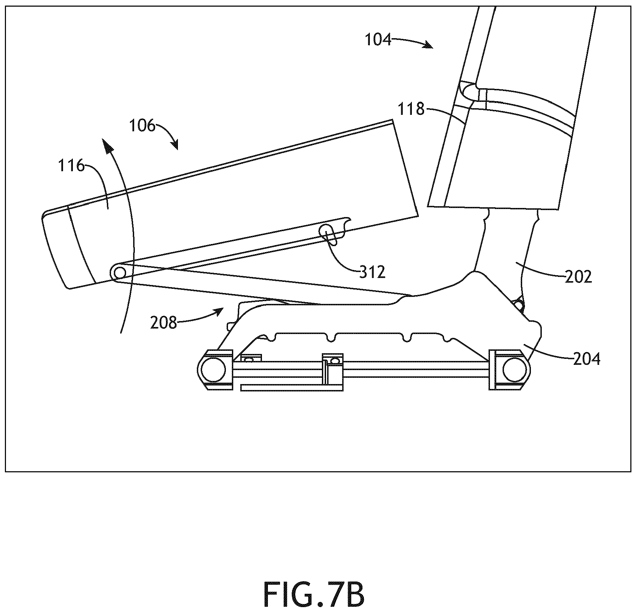

The actuator sub-system 308 may include any type of actuator known in the art including, but not limited to, one or more electro-mechanical actuators, gas spring actuators, linear/rotary actuators, or the like. It is noted that for purposes of simplicity, the actuator sub-system 308 and/or one or more components of the actuator sub-system 308 are not depicted in FIGS. 7A-9C, as such FIGS. 7A-9C are provided merely for illustrative purposes and shall not be construed as limiting the scope of the present disclosure. Further, although FIGS. 3A-4C depict a specific actuator sub-system configuration, it is noted that the actuator sub-system 308 may be configured in any manner suitable for lifting one or more components of the lift assist system, as such FIGS. 3A-4C are provided merely for illustrative purposes and shall not be construed as limiting the scope of the present disclosure.

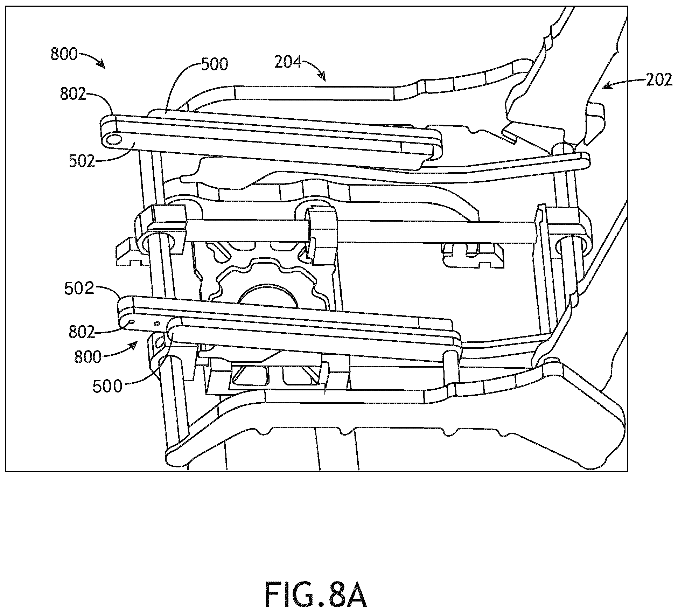

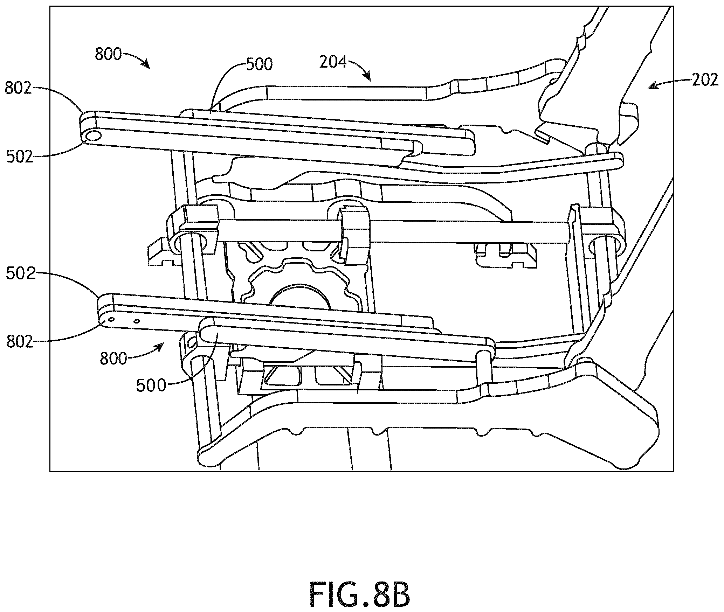

Referring to FIGS. 8A-10C, the lift assist system 208 includes a translation sub-system 800 configured to translate the seat pan 106. For example, the translation sub-system 800 may be configured to translate the seat pan 106 including the seat pan cushion 116 in a forward direction away from the seatback 104, such that the seat pan cushion 116 does not overlap with the seatback cushion 118 and/or seatback frame 202. In this regard, the seat pan 106 may be actuated without actuating the seatback 104 and/or seatback cushion 118 of the aircraft seat 102. It is noted that the independent actuation of the seat pan 106 and/or seat pan cushion 116 is a space saving mechanism. For example, the independent actuation does not require too much space surrounding the aircraft seat 102 to operate the lift assist system 208. However, in conventional systems that actuate the seatback 104 and/or seatback cushion 118, an ample amount of space surrounding the aircraft seat is needed to operate the system.

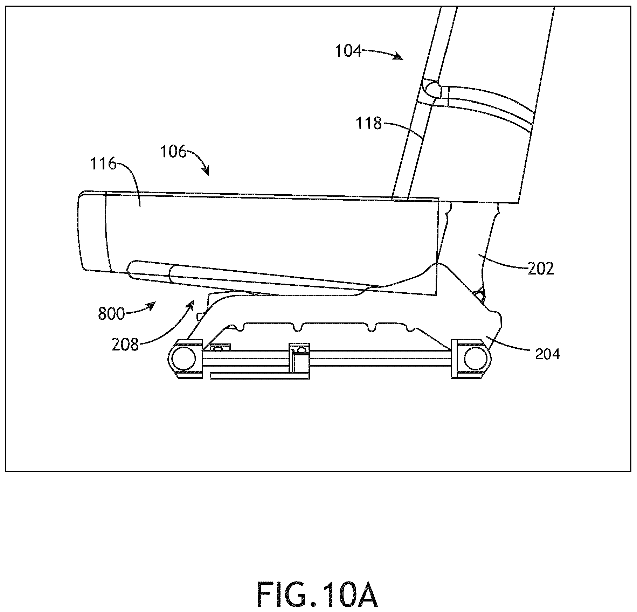

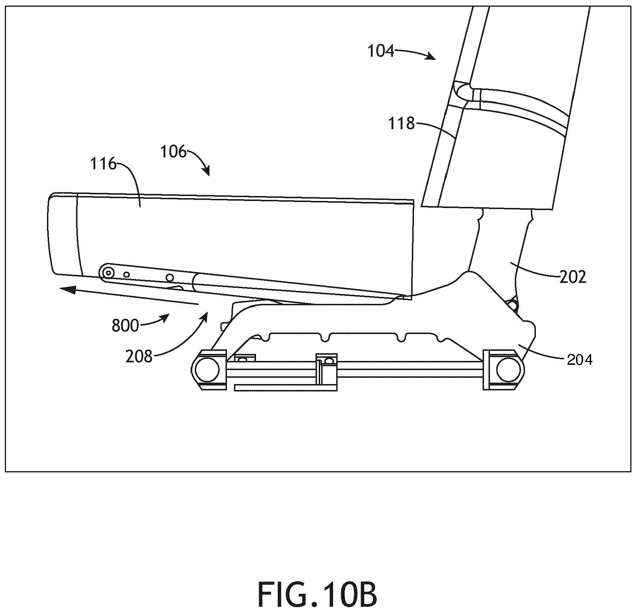

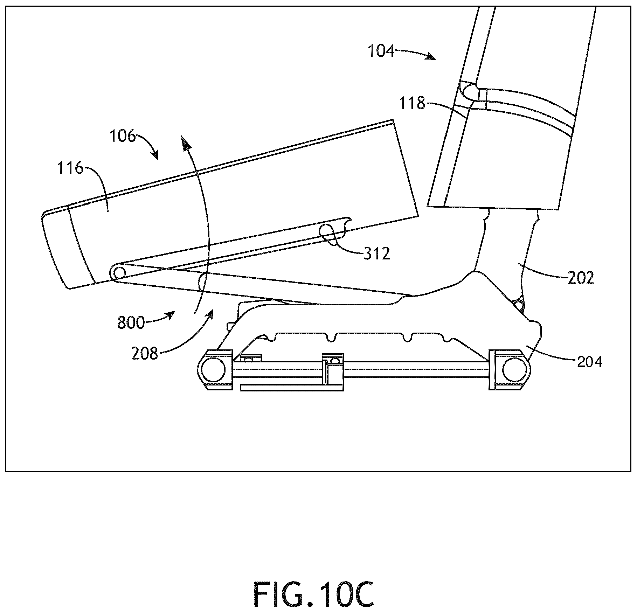

The translation sub-system 800 includes one or more tracking rails 802 positioned between the one or more pivoting lift rails 500 and the one or more fixed seat pan rails 502. For example, the one or more tracking rails 802 may be coupled to the one or more pivoting lift rails 500, such that the one or more tracking rails 802 and the one or more pivoting lift rails 500 may translate along the axis of the one or more fixed seat pan rails 502. In this regard, the one or more tracking rails 802 may translate the seat pan cushion 116 a select distance before lifting the seat pan cushion 116, such that the seat pan cushion 116 and the seatback cushion 118 do not overlap, as shown in FIGS. 10A-10C.

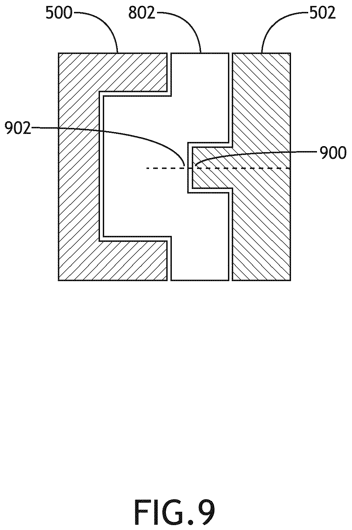

Referring to FIG. 9, the translation sub-system 800 includes a slot-and-groove assembly configured to translate the seat pan 106. For example, the one or more fixed seat pan rails 502 may include one or more grooves 900 and the one or more tracking rails 802, coupled to the one or more pivoting lift rails 500, may include one or more slots 902. For instance, the one or more tracking rails 802 may translate the seat pan cushion 116 a select distance, via the slot-and-groove assembly. In this regard, the one or more slots 902 may translate along the one or more grooves 900 to translate the seat pan cushion 116 a select distance (e.g., until the seat pan cushion 116 and seatback cushion 118 do not overlap, as shown in FIGS. 10A-10C).

The lift assist system 208 may be adjusted electrically. For example, the lift assist system 208 may include a control panel 120 for adjusting the lift assist system 208. For instance, as shown in FIG. 1, the aircraft seat 102 may include a control panel 120 within a portion of the one or more arm rests 108. For instance, when a passenger needs assistance getting up, the control panel 120 may be used to lift the seat pan cushion 116 a select distance. Further, the control panel 120 may be used to translate the seat pan cushion 116 a select distance until the seat pan cushion 116 does not overlap with the seatback cushion 118, then the control panel 120 may be used to lift the seatback cushion 118 a select distance. The control panel 120 may be coupled to an aircraft controller.

Although FIG. 1 depicts the control panel 120 coupled to a portion of the arm rests 108, it is noted that the control panel 120 may be coupled to any portion of the aircraft seat 102 and/or to any portion of the aircraft cabin 100 (e.g., an overhead portion of the aircraft seat 102, an in-flight entertainment device, or the like).

It is noted herein "vertical" may be understood as being defined with respect to a z-axis as illustrated in the Figures. In addition, it is noted herein "horizontal" may be understood as being defined with respect to an x-axis or a y-axis as illustrated in the Figures.

It is noted the aircraft seat 102 and/or the components of the aircraft seat 102 (e.g., the lift assist system 208 and other components) may be installed within an avionics environment and configured in accordance with aviation guidelines and/or standards put forth by, but not limited to, the Federal Aviation Administration (FAA), the European Aviation Safety Agency (EASA) or any other flight certification agency or organization; the American National Standards Institute (ANSI), Aeronautical Radio, Incorporated (ARINC), the Society of Automotive Engineers (SAE), or any other standards setting organization or company; the Radio Technical Commission for Aeronautics (RTCA) or any other guidelines agency or organization; or the like.

Although embodiments of the disclosure are directed to an avionics environment, it is noted the lift assist system 208 is not limited to the aircraft seat 102 within the avionics environment and/or the aircraft components within the avionics environment. For example, the lift assist system 208 may be configured to operate in any type of vehicle known in the art. For example, the vehicle may be any air, space, land, or water-based personal equipment or vehicle; any air, space, land, or water-based commercial equipment or vehicle; any air, space, land, or water-based military equipment or vehicle known in the art. For instance, the vehicle may include an automobile. By way of another example, the lift assist system 208 may be coupled to and/or configured to operate with apparatus sold for commercial or industrial use in either a home or a business. Therefore, the above description should not be interpreted as a limitation on the present disclosure but merely an illustration.

Although the disclosure has been described with reference to the embodiments illustrated in the attached drawing figures, modifications may be made herein conditional upon remaining within the scope of the claims. Components illustrated and described herein are merely examples of a system/device and components that may be used to implement embodiments of the disclosure and may be replaced with other devices and components conditional upon remaining within the scope of the claims. Furthermore, any dimensions, degrees, and/or numerical ranges provided herein are to be understood as non-limiting examples unless otherwise specified in the claims.

## Claims

1. An aircraft seat (102) comprising:
a base assembly (206) couplable to a floor of an aircraft;
a seat frame (200) coupled to the base assembly, the seat frame including a seat pan frame (204) and a seatback frame (202), the seat comprising a seat pan (106) coupled to the seat pan frame (204), the seat pan (106) including one or more fixed seat pan rails (502), the seat pan (106) configured to couple to a seat pan cushion (116), the seatback frame configured to couple to a seatback cushion (118); and
a lift assist system (208) configured to position the seat pan (106) between one of a stowed position and a deployed position with respect to the seat pan frame (204), the lift assist system comprising:
one or more pivoting lift rails (500) configured to couple to the one or more fixed seat pan rails (502), the one or more pivoting lift rails (500) arranged substantially parallel to the one or more fixed seat pan rails (502) when in the stowed position;
an actuator sub-system (308), the actuator sub-system including an actuator (309) configured to actuate the one or more pivoting lift rails (500) between one of the stowed position and the deployed position; and **characterized by**
a translation sub-system (800), the translation sub-system comprising:
one or more tracking rails (802) positioned between the one or more pivoting lift rails (500) and the one or more fixed seat pan rails (502); and
a slot-and-groove assembly configured to translate the seat pan (106) a select distance away from the seatback frame (202), the slot-and-groove assembly including one or more slots (902) positioned on the one or more pivoting lift rails (500) and one or more grooves (900) positioned on the one or more tracking rails (802), the one or more slots (902) configured to translate along the one or more grooves (900) to translate the seat pan (106) the select distance away from the seatback frame (202).

2. The aircraft seat of Claim 1, wherein the actuator sub-system further comprises:
one or more pivots coupled to one or more fixed cross seat pan rails (502), the one or more pivots configured to couple the actuator (309) to the one or more pivoting lift rails (500).

3. The aircraft seat of Claim 2, wherein the actuator (309) is configured to actuate the seat pan (106) between the stowed position and the deployed position by lifting the one or more pivoting lift rails (500) a predetermined distance to cause the seat pan (106) to lift the predetermined distance.

4. The aircraft seat of Claim 3, wherein the actuator (309) is configured to apply an amount of force in an upward direction to the one or more fixed cross seat pan rails (502) to cause the one or more pivoting lift rails (500) to lift the predetermined distance to cause the seat pan (106) to lift the predetermined distance.

5. The aircraft seat of any preceding Claim, wherein the aircraft seat further comprises:
a control panel (120) communicatively coupled to an aircraft controller, the control panel coupled to the actuator sub-system (308) to cause the actuator sub-system to actuate the one or more pivoting lift rails (500) a predetermined distance.

6. The aircraft seat of any preceding Claim, wherein the actuator (309) includes an electro-mechanical actuator.

7. The aircraft seat of any preceding Claim, wherein the actuator (309) is configured to actuate the seat pan (106) between the stowed position and the deployed position by lifting the one or more pivoting lift rails (500) a predetermined distance to cause the seat pan (106) to lift the predetermined distance when the seat pan cushion (116) and the seatback cushion (118) are separated a select distance.

8. The aircraft seat of any preceding Claim, wherein the aircraft seat further comprises:
a control panel (120) communicatively coupled to an aircraft controller, the control panel coupled to the translation sub-system (800) to cause the translation sub-system (800) to translate the seat pan (106) the select distance away from the seatback frame (202).

## Patentansprüche

1. Luftfahrzeugsitz (102), umfassend:
eine Basisbaugruppe (206), die an einen Boden eines Luftfahrzeugs koppelbar ist;
einen Sitzrahmen (200), der an die Basisbaugruppe gekoppelt ist, wobei der Sitzrahmen einen Sitzschalenrahmen (204) und einen Sitzlehnenrahmen (202) beinhaltet, wobei der Sitz eine Sitzschale (106) umfasst, die an den Sitzschalenrahmen (204) gekoppelt ist, wobei die Sitzschale (106) eine oder mehrere feste Sitzschalenschienen (502) beinhaltet, wobei die Sitzschale (106) dazu konfiguriert ist, sich an ein Sitzschalenpolster (116) zu koppeln, wobei der Sitzlehnenrahmen dazu konfiguriert ist, sich an ein Sitzlehnenpolster (118) zu koppeln; und
ein Hebehilfssystem (208), das dazu konfiguriert ist, die Sitzschale (106) zwischen einer Verstauposition und einer Ausfahrposition in Bezug auf den Sitzschalenrahmen (204) zu positionieren, wobei das Hebehilfssystem umfasst:
eine oder mehrere schwenkbare Hebeschienen (500), die dazu konfiguriert sind, sich an die eine oder die mehreren festen Sitzschalenschienen (502) zu koppeln, wobei die eine oder die mehreren schwenkbaren Hebeschienen (500) in der Verstauposition im Wesentlichen parallel zu der einen oder den mehreren festen Sitzschalenschienen (502) angeordnet sind;
ein Betätigungselement-Subsystem (308), wobei das Betätigungselement-Subsystem ein Betätigungselement (309) beinhaltet, das dazu konfiguriert ist, die eine oder die mehreren schwenkbaren Hebeschienen (500) zwischen einer von der Verstauposition und der Ausfahrposition zu betätigen; und
**gekennzeichnet durch**
ein Verschiebungssubsystem (800), wobei das Verschiebungssubsystem umfasst:
eine oder mehrere Führungsschienen (802), die zwischen der einen oder den mehreren schwenkbaren Hebeschienen (500) und der einen oder den mehreren festen Sitzschalenschienen (502) positioniert sind; und
eine Schlitz- und Nutbaugruppe, die dazu konfiguriert ist, die Sitzschale (106) um eine ausgewählte Entfernung von dem Sitzlehnenrahmen (202) weg zu verschieben, wobei die Schlitzund Nutbaugruppe einen oder mehrere Schlitze (902), die auf der einen oder den mehreren schwenkbaren Hebeschienen (500) positioniert sind, und eine oder mehrere Nuten (900), die auf der einen oder den mehreren Führungsschienen (802) positioniert sind, umfasst, wobei der eine oder die mehreren Schlitze (902) dazu konfiguriert sind, sich entlang der einen oder den mehreren Nuten (900) zu verschieben, um die Sitzschale (106) um die ausgewählte Entfernung von dem Sitzlehnenrahmen (202) weg zu verschieben.

2. Luftfahrzeugsitz nach Anspruch 1, wobei das Betätigungselement-Subsystem ferner umfasst:
einen oder mehrere Schwenkpunkte, die an eine oder mehrere feste Quersitzschalenschienen (502) gekoppelt sind, wobei der eine oder die mehreren Schwenkpunkte dazu konfiguriert sind, das Betätigungselement (309) an die eine oder die mehreren schwenkbaren Hebeschienen (500) zu koppeln.

3. Luftfahrzeugsitz nach Anspruch 2, wobei das Betätigungselement (309) dazu konfiguriert ist, die Sitzschale (106) zwischen der Verstauposition und der Ausfahrposition zu betätigen, indem die eine oder die mehreren schwenkbaren Hebeschienen (500) um eine vorbestimmte Entfernung angehoben werden, um zu bewirken, dass sich die Sitzschale (106) um die vorbestimmte Entfernung anhebt.

4. Luftfahrzeugsitz nach Anspruch 3, wobei das Betätigungselement (309) dazu konfiguriert ist, einen Kraftaufwand in einer Aufwärtsrichtung auf die eine oder die mehreren festen Quersitzschalenschienen (502) auszuüben, um zu bewirken, dass sich die eine oder die mehreren schwenkbaren Hebeschienen (500) um die vorbestimmte Entfernung anheben, um zu bewirken, dass sich die Sitzschale (106) um die vorbestimmte Entfernung anhebt.

5. Luftfahrzeugsitz nach einem der vorhergehenden Ansprüche, wobei der Luftfahrzeugsitz ferner umfasst:
eine Steuertafel (120), die kommunikativ an eine Flugzeugsteuereinheit gekoppelt ist, wobei die Steuertafel an das Betätigungselement-Subsystem (308) gekoppelt ist, um zu bewirken, dass das Betätigungselement-Subsystem die eine oder die mehreren schwenkbaren Hebeschienen (500) um eine vorbestimmte Entfernung betätigt.

6. Luftfahrzeugsitz nach einem der vorhergehenden Ansprüche, wobei das Betätigungselement (309) ein elektromechanisches Betätigungselement beinhaltet.

7. Luftfahrzeugsitz nach einem der vorhergehenden Ansprüche, wobei das Betätigungselement (309) dazu konfiguriert ist, die Sitzschale (106) zwischen der Verstauposition und der Ausfahrposition zu betätigen, indem die eine oder die mehreren schwenkbaren Hebeschienen (500) um eine vorbestimmte Entfernung angehoben werden, um zu bewirken, dass sich die Sitzschale (106) um die vorbestimmte Entfernung anhebt, wenn das Sitzschalenpolster (116) und das Sitzlehnenpolster (118) um eine ausgewählte Entfernung getrennt sind.

8. Luftfahrzeugsitz nach einem der vorhergehenden Ansprüche, wobei der Luftfahrzeugsitz ferner umfasst:
eine Steuertafel (120), die kommunikativ an eine Flugzeugsteuereinheit gekoppelt ist, wobei die Steuertafel an das Verschiebungssubsystem (800) gekoppelt ist, um zu bewirken, dass das Verschiebungssubsystem (800) die Sitzschale (106) um die ausgewählte Entfernung von dem Sitzlehnenrahmen (202) weg verschiebt.

## Revendications

1. Siège d'avion (102) comprenant :
un ensemble de base (206) pouvant être couplé à un plancher d'une cabine d'avion ;
un cadre de siège (200) couplé à l'ensemble de base, le cadre de siège comportant un cadre d'assise de siège (204) et un cadre de dossier de siège (202), le siège comprenant une assise de siège (106) couplé au cadre d'assise de siège (204), l'assise de siège (106) comportant un ou plusieurs rails d'assise de siège fixes (502), l'assise de siège (106) configurée pour être couplée à un coussin d'assise de siège (116), le cadre de dossier de siège configuré pour être couplé à un coussin de dossier de siège (118) ; et
un système d'assistance au levage (208) configuré pour positionner l'assise de siège (106) entre une position rangée et une position déployée par rapport au cadre d'assise de siège (204), le système d'assistance au levage comprenant :
un ou plusieurs rails de levage pivotants (500) configurés pour se coupler à l'un ou plusieurs rails d'assise de siège fixes (502), l'un ou plusieurs rails de levage pivotants (500) agencés sensiblement parallèlement à l'un ou plusieurs rails d'assise de siège fixes (502) lorsqu'ils sont en position rangée ;
un sous-système d'actionneur (308), le sous-système d'actionneur comportant un actionneur (309) configuré pour actionner l'un ou plusieurs rails de levage pivotants (500) entre la position rangée et la position déployée ; et **caractérisé par**
un sous-système de translation (800), le sous-système de translation comprenant :
un ou plusieurs rails de suivi (802) positionnés entre l'un ou plusieurs rails de levage pivotants (500) et l'un ou plusieurs rails d'assise de siège fixes (502) ; et
un ensemble fente et rainure configuré pour déplacer l'assise de siège (106) d'une distance sélectionnée loin du cadre de dossier de siège (202), l'ensemble fente et rainure comportant une ou plusieurs fentes (902) positionnées sur l'un ou plusieurs rails de levage pivotants (500) et une ou plusieurs rainures (900) positionnées sur l'un ou plusieurs rails de suivi (802), l'une ou plusieurs fentes (902) étant configurées pour se déplacer le long de l'une ou plusieurs rainures (900) pour déplacer l'assise de siège (106) de la distance sélectionnée loin du cadre de dossier de siège (202).

2. Siège d'avion selon la revendication 1, dans lequel le sousensemble d'actionneur comprend également :
un ou plusieurs pivots couplés à un ou plusieurs rails d'assise de siège transversaux fixes (502), l'un ou plusieurs pivots étant configurés pour coupler l'actionneur (309) à l'un ou plusieurs rails de levage pivotants (500).

3. Siège d'avion selon la revendication 2, dans lequel l'actionneur (309) est configuré pour actionner l'assise de siège (106) entre la position rangée et la position déployée en soulevant l'un ou plusieurs rails de levage pivotants (500) sur une distance prédéterminée pour amener l'assise de siège (106) à soulever la distance prédéterminée.

4. Siège d'avion selon la revendication 3, dans lequel l'actionneur (309) est configuré pour appliquer un degré de force dans une direction vers le haut sur l'un ou plusieurs rails d'assise de siège transversaux fixes (502) pour amener le ou les rails de levage pivotants (500) pour soulever la distance prédéterminée afin d'amener l'assise de siège (106) à soulever la distance prédéterminée.

5. Siège d'avion selon une quelconque revendication précédente, dans lequel le siège d'avion comprend également :
un panneau de commande (120) couplé en communication à un dispositif de commande d'avion, le panneau de commande étant couplé au sous-système d'actionneur (308) pour amener le sous-système d'actionneur à actionner l'un ou plusieurs rails de levage pivotants (500) sur une distance prédéterminée.

6. Siège d'avion selon une quelconque revendication précédente, dans lequel l'actionneur (309) comporte un actionneur électromécanique.

7. Siège d'avion selon une quelconque revendication précédente, dans lequel l'actionneur (309) est configuré pour actionner l'assise de siège (106) entre la position rangée et la position déployée en soulevant l'un ou plusieurs rails de levage pivotants (500) sur une distance prédéterminée pour amener l'assise de siège (106) à soulever la distance prédéterminée lorsque le coussin d'assise de siège (116) et le coussin de dossier de siège (118) sont séparés par une distance sélectionnée.

8. Siège d'avion selon une quelconque revendication précédente, dans lequel le siège d'avion comprend également :
un panneau de commande (120) couplé en communication à un dispositif de commande d'avion, le panneau de commande couplé au sous-système de translation (800) pour amener le sous-système de translation (800) à déplacer l'assise de siège (106) à la distance sélectionnée loin du cadre de dossier de siège (202).
